# EUROPÄISCHE PATENTSCHRIFT

(11) **EP 0 931 966 B1**
(45) Veröffentlichungstag und Bekanntmachung des Hinweises auf die Patenterteilung: **11.06.2003**
(21) Anmeldenummer: 98123998.1
(22) Anmeldetag: 17.12.1998
(51) Int. Cl.: F16L 17/04, F16L 21/06

(54) **Spannbare Rohrkupplung**
Tensionable coupling for pipes
Raccord de tuyaux apte à être tendu

(30) Priorität: 24.01.1998 DE 19802676
(43) Veröffentlichungstag der Anmeldung: 28.07.1999
(73) Patentinhaber: Rasmussen GmbH, 63477 Maintal (DE)
(72) Erfinder: Schreiter, Reiner, 63477 Maintal (DE)
(74) Vertreter: Knoblauch, Andreas, Dr.-Ing.

(56) Entgegenhaltungen:
- EP-A- 0 060 309
- EP-A- 0 205 896
- EP-A- 0 211 158
- EP-A- 0 360 946
- DE-A- 2 834 046
- FR-A- 2 662 489

## Beschreibung

Die Erfindung bezieht sich auf eine spannbare Rohrkupplung zum axialen Verbinden zweier glatter Rohre, mit aus einem Metallband geformten, im verbundenen Zustand der Rohre deren Endabschnitte umgebenden, zumindest eine Unterbrechung aufweisenden Ringen, die an ihrem radial inneren Rand in einer Ebene des Metallbands liegende Zähne aufweisen, die beim Spannen der Rohrkupplung mit ihren freien Enden in das Rohrmaterial eingreifen, wobei die dem einen Rohr zugeordneten Zähne zu den dem anderen Rohr zugeordneten Zähnen hin geneigt sind.

Bei einer bekannten Rohrkupplung dieser Art (DE-B2-25 55 179) sind die Zähne (auch "Krallen" genannt) sägezahnförmig zugespitzt, wobei nicht nur ihre in Umfangsrichtung benachbarten Flanken V-förmig sind, sondern auch ihre radial innere Stirnfläche schräg zur Axialrichtung (Längsrichtung der Rohre) geneigt ist. Die spitze Form der Zähne hat zwar den Vorteil, daß sie auch bei Metallrohren tief in das Rohrmaterial eindringen können, um ein Herausgleiten der Rohre aus der Rohrkupplung bei hohem Innendruck zu verhindern. Darüber hinaus können sie sich bei hinreichender Steifigkeit des Zahnmaterials bei zunehmendem Innendruck und axialer Auseinanderbewegung der Rohre aus ihrer Schräglage gegenüber der Längsrichtung radial in zunehmendem Maße aufrichten und dadurch die Klemmwirkung der Rohrkupplung am Umfang der Rohre sowie die Eindringtiefe der Zähne steigern, um den axialen Zusammenhalt der Rohre trotz des zunehmenden Innendrucks zu gewährleisten. Doch besteht bei sehr hohen Innendrücken schließlich die Gefahr, daß die Steifigkeit der Zähne nicht ausreicht, insbesondere aufgrund ihres sich zum spitzen Ende hin verringernden Querschnitts, so daß die Zähne in sich verbogen werden können. Darüber hinaus ist es aufwendig, die radial innere Stirnfläche der Zähne aus einem ebenen Metallband schräg und nicht senkrecht zur Ebene des Metallbands auszubilden. Ähnliche Schwierigkeiten treten bei den Zähnen der aus den deutschen Patentschriften DE-C2-27 31 465, DE-C1-41 11 952, DE-C1-42 04 762 und DE-C1-44 11 062 sowie den europäischen Patentanmeldungen EP-A1-769 646 und EP-A1-769 647 bekannten Rohrkupplungen auf.

Aus der EP-A1-211 158 ist ebenfalls eine Rohrkupplung nach dem Oberbegriff des Patentanspruchs 1 bekannt. Die radial inneren Ränder der Zähne haben dort ein konkaves Profil in Form eines einen stumpfen Winkel einschließenden V, so daß sich zwei spitzwinklige kleinere Zähne ergeben, von denen der eine beim Spannen der Rohrkupplung ins Rohrmaterial eindringt und der andere sich auf der Umfangsfläche des Rohres auflegt, um ein zu tiefes Eindringen des einen kleineren Zahns in das Rohrmaterial zu verhindern. Das konkave Profil ist jedoch schwierig herstellbar. Der Erfindung liegt die Aufgabe zugrunde, eine Rohrkupplung der eingangs genannten Art anzugeben, bei der die Ausbildung der Zähne nicht nur einfacher ist, sondern die Zähne auch eine höhere Biegesteifigkeit aufweisen.

Erfindungsgemäß ist diese Aufgabe dadurch gelöst, daß in die der Außenseite des in die Rohrkupplung eingeführten Rohres zugekehrte Seite jedes Zahns in der Nähe des freien Zahnendes wenigstens eine Vertiefung eingedrückt und durch die Vertiefung das Material des Zahns auf dieser Zahnseite zum freien Zahnende hin verdrängt ist.

Bei dieser Rohrkupplung werden die Zähne durch die Verdrängung des Zahnmaterials während der Ausbildung der Vertiefung schärfer zugespitzt. Sie können daher tief in das Rohrmaterial eindringen. Ferner können die Stirnflächen der Zähne auf einfache Weise beim Stanzen des Metallbands senkrecht zur Ebene des Metallbands geschnitten und die Vertiefungen in einem Arbeitsgang mit dem Stanzen mittels Preßstempeln ausgebildet werden. Durch das Eindrücken der Vertiefungen wird das Material der Zähne im Bereich der Vertiefungen verdichtet und dadurch gleichzeitig verfestigt. Eine zusätzliche Versteifung ergibt sich durch die Kante am Rand der Vertiefungen. Die Zähne erhalten dadurch eine höhere Biegefestigkeit in der Nähe ihrer Enden.

Eine vorteilhafte Weiterbildung kann darin bestehen, daß die Oberfläche der Vertiefung die Form eines Hohlkugelabschnitts hat. Diese Form der Vertiefungen gewährleistet eine sehr hohe Versteifung der Zähne und stellt zugleich eine besonders wirksame Verdrängung des Zahnmaterials zum freien Ende der Zähne hin sicher.

Nachstehend wird die Erfindung anhand der beiliegenden Zeichnungen bevorzugter Ausführungsbeispiele näher beschrieben. Es zeigen:
- Fig. 1: eine radiale Ansicht eines Ausführungsbeispiels der erfindungsgemäßen Rohrkupplung, teilweise im Schnitt,
- Fig. 2: eine Axialansicht der Rohrkupplung nach Fig. 1,
- Fig. 3: einen Axialschnitt durch die Rohrkupplung nach Fig. 1 im gespannten Zustand, in dem sie zwei glatte Rohre axial verbindet,
- Fig. 4: einen vergrößerten Ausschnitt der Fig. 3,
- Fig. 5: einen Querschnitt durch den in den Fig. 1, 3 und 4 links dargestellten Ring im Bereich eines Zahns,
- Fig. 6: einen vergrößerten Teil eines Rings der Rohrkupplung nach den Fig. 1 bis 3, in axialer Ansicht,
- Fig. 7: einen Querschnitt durch den Ring nach Fig. 6 im Bereich einer Vertiefung,
- Fig. 8: eine Ansicht eines Teils eines abwandelten Rings, wie er bei der Kupplung nach den Fig. 1 bis 3 verwendet werden kann, mit zwei Vertiefungen statt einer Vertiefung in jedem Zahn,
- Fig. 9: einen Querschnitt durch den Ring nach Fig. 8 im Bereich einer Vertiefung,
- Fig. 10: einen Ausschnitt einer weiteren Abwandlung des Rings der Rohrkupplung nach den Fig. 1 bis 3, bei dem die Zähne von vornherein wellenförmig ausgebildet sind, und
- Fig. 11: einen Querschnitt durch den Ring nach Fig. 1 im Bereich einer Vertiefung.

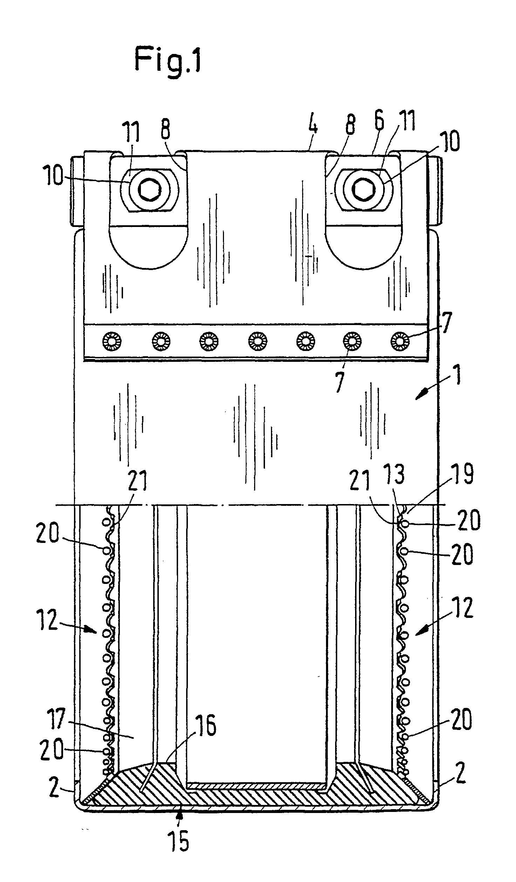

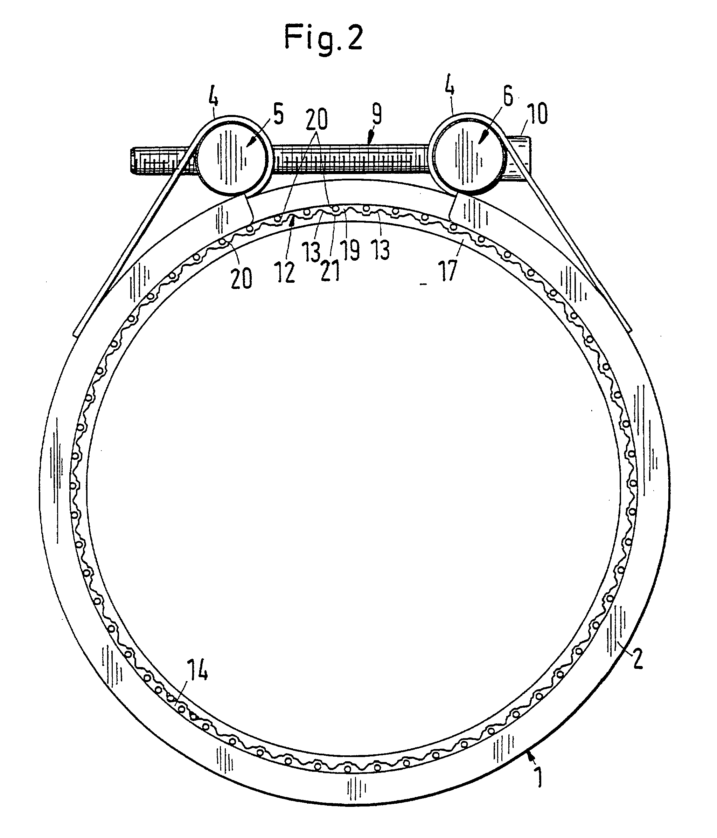

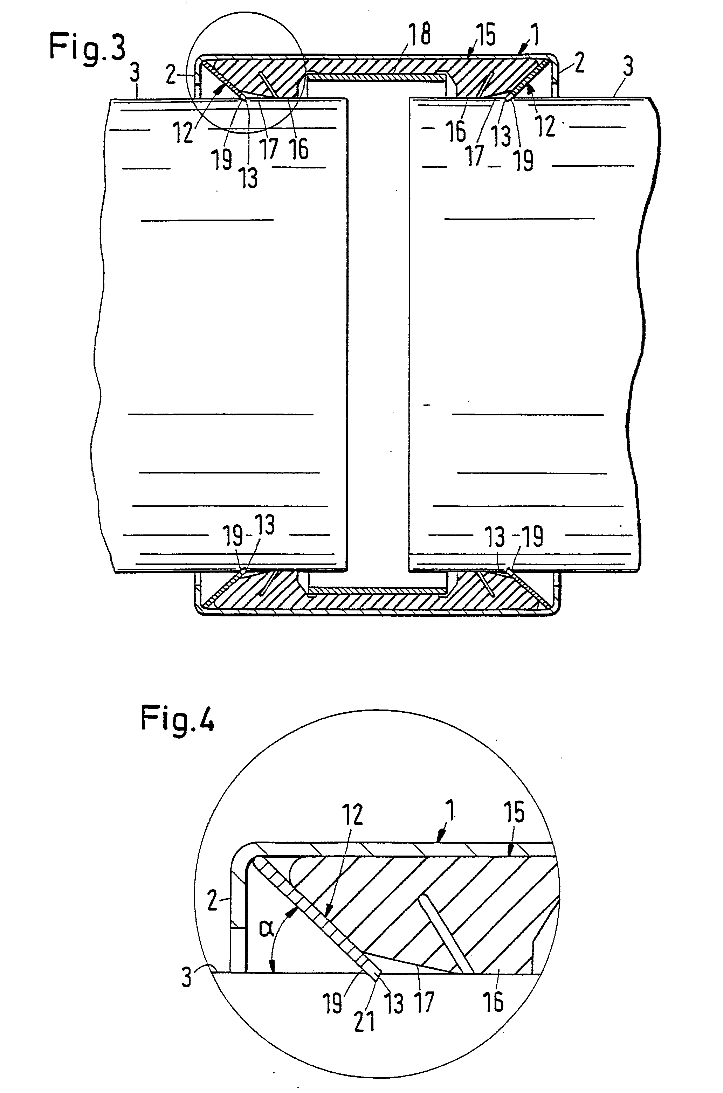

Die Rohrkupplung nach den Fig. 1 bis 7 ist wie folgt ausgebildet: Ein nicht vollständig zu einem Ring aus Stahlblech gebogener Mantel 1 hat an seinen axialen Enden radial nach innen umgebogene Stirnwände 2, deren Innendurchmesser größer als der Außendurchmesser der zu verbindenden Rohre 3 (Fig. 3) ist. Der Mantel 1 ist in Umfangsrichtung unterbrochen und an den die Unterbrechung begrenzenden Enden mit Laschen ausgebildet, die jeweils zu einer Schlaufe 4 (Fig. 1 und 2) um jeweils einen axialen Rundbolzen 5 bzw. 6 auf die Außenseite des Mantels 1 herumgebogen und an dieser durch Buckelschweißungen 7 (Fig. 1) befestigt sind. Die Schlaufen 4 haben jeweils einen sich teilweise um die Rundbolzen 5, 6 herum erstreckenden Schlitz 8 (Fig. 1). Der Rundbolzen 6 hat im Bereich der Schlitze 8 jeweils eine axial durchgehende Bohrung ohne Innengewinde. Der Rundbolzen 5 hat im Bereich jedes Schlitzes der anderen Schlaufe ebenfalls eine radial durchgehende Bohrung, jedoch mit Innengewinde. Die Schlitze 8 und die radialen Bohrungen der Rundbolzen 5, 6 sind jeweils von einer Spannschraube 9 durchsetzt, deren Kopf 10 einen Innenmehrkant aufweist und an einer Schulter 11 einer die Durchgangsbohrungen des Rundbolzens 6 erweiternden Sackbohrung anliegt.

An der Innenseite der Biegekante der Stirnwände 2 des Mantels 1 liegt die radial äußere Kante jeweils eines kegelstumpfförmigen, einmal in Umfangsrichtung unterbrochenen Rings 12 an. Die Ringe 12 sind aus einem Metallband geformt. An ihrem radial inneren Rand sind die Ringe 12 mit in der Ebene des Metallbands liegenden Zähnen 13 versehen. Die Endabschnitte 14 (Fig. 2) jedes Rings 12 überlappen sich in Umfangsrichtung.

An der Innenseite des Mantels 1 liegt eine Dichtungsmanschette 15 aus elastomerem Material mit radial nach innen an jedem axialen Ende vorstehenden Dichtlippen 16, 17 an. Die Dichtlippen 16, 17 liegen an den Rohren 3 außen an, wenn die Rohre 3 gemäß Fig. 3 in die Rohrkupplung eingeführt und verspannt sind. Zwischen den Dichtlippen 16 liegt an der Innenseite der Dichtungsmuffe 15 ein aus einem Blechstreifen geformter Ring 18 an, der einmal in Umfangsrichtung unterbrochen ist und dessen Endabschnitte sich in Umfangsrichtung überlappen. Der Ring 18 stellt sicher, daß das Material der Dichtungsmuffe 15 beim Spannen der Rohrkupplung nicht zwischen die Enden der Rohre 3 gedrückt wird.

Die Unterbrechung des Mantels 1 ist durch eine Brücke überbrückt, die am Umfang der Dichtungsmanschette 15 anliegt und von den Endabschnitten des Mantels 1 überlappt ist.

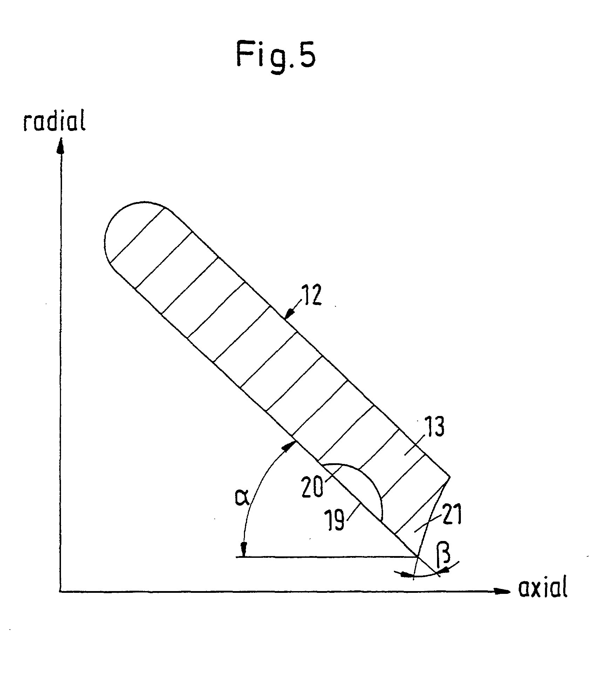

Wie Fig. 3 zeigt, sind die dem einen Rohr zugeordneten Zähne 13, einschließlich des Rings 12, an dem sie ausgebildet sind, zu den dem anderen Rohr 3 zugeordneten Zähnen 13, einschließlich dem anderen Ring, an dem diese Zähne 13 ausgebildet sind, unter einem Winkel α von etwa 35° bis etwa 55°, vorzugsweise 45°, gemäß den Fig. 4 und 5 hin geneigt. In die der Außenseite des in die Rohrkupplung eingeführten Rohres 3 zugekehrte Seite 19 jedes Zahns 13 ist in der Nähe des freien Zahnendes eine Vertiefung 20 eingedrückt, und durch die Vertiefung 20 ist das Material des Zahns 13 auf dieser Zahnseite 19 zum freien Zahnende hin verdrängt. Durch die Verdrängung ergibt sich eine scharfkantige Spitze 21 an jedem Zahnende mit einem Keilwinkel β von etwa 50° bis etwa 80°, vorzugsweise etwa 70° (Fig. 5).

Die Oberfläche jeder vertiefung 20 hat die Form eines Hohlkugelabschnitts, kann aber auch beispielsweise die Form eines spitzen oder stumpfen Kegels oder einer spitzen oder stumpfen drei- oder vierseitigen Pyramide haben.

Beim Spannen der Rohrkupplung dringen die Zähne 13 mit den Spitzen 21 an ihren freien Enden in das Rohrmaterial ein, vgl. Fig. 3 und 4, und verhindern dadurch ein Auseinanderziehen der Rohre 3 bei hohem Innendruck in den Rohren 3. Außerdem haben die Ringe 12, einschließlich der Zähne 13, das Bestreben, sich radial aufzurichten, wenn sich die Rohre 3 unter dem Innendruck axial auseinanderbewegen wollen. Dadurch erhöht sich die Eindringtiefe der Zähne 13 im Rohrmaterial und damit auch die axiale Belastbarkeit der durch die Rohrkupplung bewirkten Verbindung der Rohre.

Die Ringe 12 werden zunächst aus einem ebenen Blech durch einen senkrecht zur Blechebene geführten Schnitt ausgestanzt, wobei gleichzeitig die Zähne 13 gestanzt und im gleichen Stanzhub die Vertiefungen 20 in die Außenseite 19 der Zähne 13 mittels eines Preßstempels gedrückt werden. Bei diesem Drückvorgang wird das Zahnmaterial zum freien Ende der Zähne 13 hin verdrängt und aus der zunächst senkrecht zur Zahnebene verlaufenden Stirnfläche der Zähne 13 die Spitze 21 mit dem Keilwinkel β geformt. Durch das Eindrücken der Vertiefungen 20 wird gleichzeitig das Zahnmaterial im Bereich der Vertiefungen 20 verdichtet und damit verfestigt. Die Zähne 13 haben daher eine höhere Biegesteifigkeit. Diese wird noch darüber hinaus durch die Kante am Umfangsrand der Vertiefungen 20 erhöht. Dementsprechend hält die Rohrverbindung sehr hohen Axialbelastungen, die bestrebt sind, die Rohre auseinanderzubewegen, ohne eine Verbiegung der Zähne 13 stand.

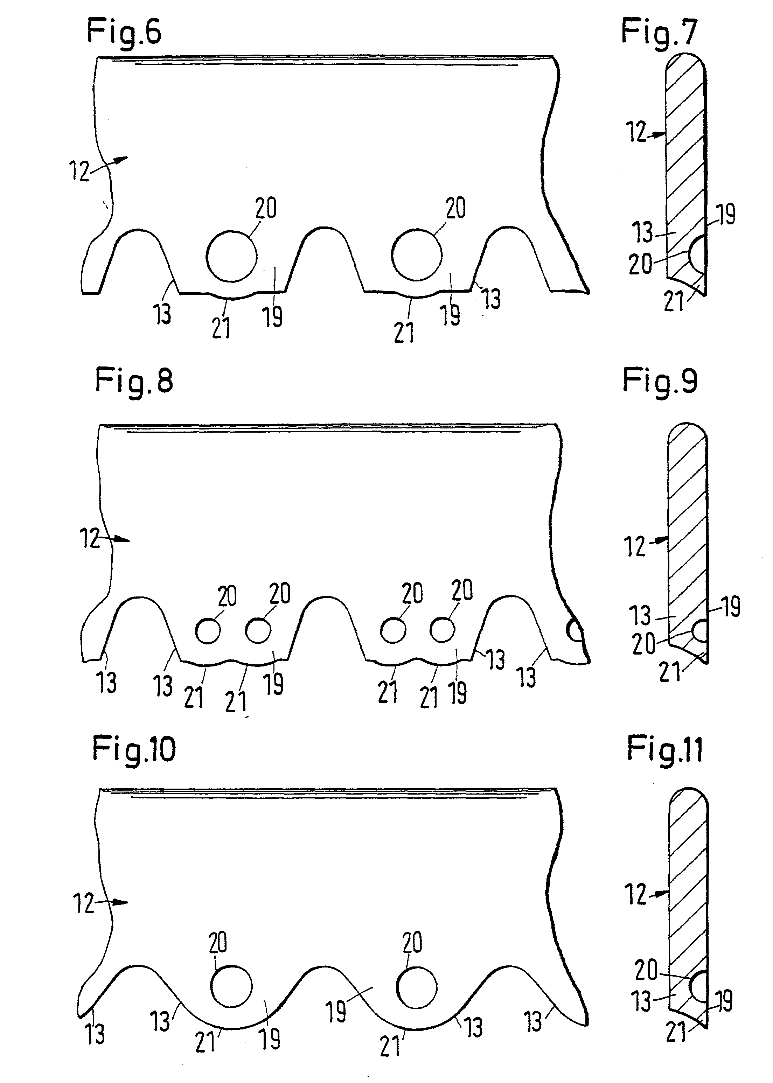

Die Fig. 8 und 9 stellen eine abgewandelte Form der Zähne 13 dar, bei der in der Außenseite 19 der Zähne 13 jeweils zwei in Umfangsrichtung nebeneinander liegende Vertiefungen 20 ausgebildet sind.

Während bei den Ausführungsformen nach den Fig. 1 bis 9 die Zähne 13 ohne die Vertiefungen-20 an ihrem radial inneren Ende - vor der Verbiegung des Ausgangsblechs der Ringe 20 in die Kegelstumpfform - geradlinig sind, wobei erst durch die Ausbildung der Vertiefungen 20 die etwa in einem Kreisbogen vorspringende Form der Spitzen 21 entsteht, sind bei der Abwandlung nach Fig. 10 und 11 die Zähne 13 gemäß Fig. 10 bereits durch das Stanzen, ohne die Ausbildung der Vertiefungen 20, weitgehend wellenförmig, wobei die Wellenform auch bei Ausbildung der Vertiefungen 20 in der Axialansicht nach Fig. 10 weitgehend kontinuierlich erhalten bleibt.

Weitere Abwandlungen können beispielsweise darin bestehen, daß die Stirnwände 2 des Mantels 1 nicht genau radial, sondern axial zueinander hin gebogen und mit den Zähnen 13 der Ringe 12 entsprechenden Zähnen versehen werden, die in das Rohrmaterial eingreifen können.

Alternativ könnten an der Innenseite des Mantels 1 mit einer doppelten Reihe von Zähnen versehene Ringe angebracht sein, wobei die Zähne jedes Rings in der gleichen Richtung oder in entgegengesetzten Richtungen zur Längsrichtung hin geneigt sein.

Bei Metallrohren würde das Material der Ringe aus Stahlblech bestehen. Bei Rohren aus weicherem Material, wie Kunststoff, können die Ringe auch aus weniger hartem Metallblech bestehen.

## Patentansprüche

1. Spannbare Rohrkupplung zum axialen Verbinden zweier glatter Rohre (3), mit aus einem Metallband geformten, im verbundenen Zustand der Rohre (3) deren Endabschnitte umgebenden, zumindest eine Unterbrechung aufweisenden Ringen (12), die an ihrem radial inneren Rand in einer Ebene des Metallbands liegende Zähne (13) aufweisen, die beim Spannen der Rohrkupplung mit ihren freien Enden in das Rohrmaterial eingreifen, wobei die dem einen Rohr (3) zugeordneten Zähne (13) zu den dem anderen Rohr (3) zugeordneten Zähnen (13) hin geneigt sind, **dadurch gekennzeichnet, daß** in die der Außenseite des in die Rohrkupplung eingeführten Rohres (3) zugekehrte Seite (19) jedes Zahns (13) in der Nähe des freien Zahnendes wenigstens eine Vertiefung (20) eingedrückt und durch die Vertiefung (20) das Material des Zahns (13) auf dieser Zahnseite (19) zum freien Zahnende hin verdrängt ist.

2. Rohrkupplung nach Anspruch 1, **dadurch gekennzeichnet, daß** die Oberfläche der Vertiefung (20) die Form eines Hohlkugelabschnitts hat.

## Claims

1. A tightenable pipe coupling for axially connecting two smooth pipes (30 comprising rings (12) formed from a metal band and surrounding the end portions of the pipes (3) in the connected condition thereof and having at least one interruption and at their radially inner edge having teeth (13) which are disposed in a plane of the metal band and which engage with their free ends into the pipe material when the pipe coupling is tightened, wherein the teeth (13) associated with the one pipe (3) are inclined towards the teeth associated with the other pipe (3), **characterised in that** at least one depression (20) is pressed into the side (19) of each tooth (13), which side is towards the outside of the pipe (3) introduced into the pipe coupling, in the proximity of the free end of the tooth, and the material of the tooth (13) on said side (19) of the tooth is displaced by the depression (20) towards the free end of the tooth.

2. A pipe coupling according to claim 1 **characterised in that** the surface of the depression (20) is in the form of a hollow spherical portion.

## Revendications

1. Raccord de tuyaux qui peut être serré, pour la liaison axiale de deux tuyaux lisses (3), comportant des anneaux (12) façonnés à partir d'une bande métallique, qui entourent à l'état relié des tuyaux (3) les tronçons d'extrémité de ceux-ci, qui présentent au moins une interruption et qui présentent sur leur bord radialement interne des dents (13) situées dans un plan de la bande métallique et pénétrant dans la matière des tuyaux par leurs extrémités libres lors du serrage du raccord de tuyaux, les dents (13) associées à un tuyau (3) étant inclinées vers les dents (13) associées à l'autre tuyau (3),
***caractérisé en ce que*,** dans le côté (19) de chaque dent (13) tourné vers le côté externe du tuyau (3) introduit dans le raccord de tuyaux, au moins une cavité (20) est enfoncée au voisinage de l'extrémité libre de la dent et **en ce que** la matière de la dent (13) de ce côté (19) de la dent est refoulée vers l'extrémité libre de la dent par la cavité (20).

2. Raccord de tuyaux suivant la revendication 1, **caractérisé en ce que** la surface de la cavité (20) a la forme d'une section sphérique creuse.
